(19) Europäisches Patentamt
European Patent Office
Office européen des brevets

(11) **EP 1 067 843 B1**

(12) **EUROPEAN PATENT SPECIFICATION**

(45) Date of publication and mention
of the grant of the patent:
**16.01.2002 Bulletin 2002/03**

(51) Int Cl.7: **A23K 1/14**, A23K 1/18

(21) Application number: **99915223.4**

(86) International application number:
**PCT/US99/07259**

(22) Date of filing: **02.04.1999**

(87) International publication number:
**WO 99/51108 (14.10.1999 Gazette 1999/41)**

(54) **COMPOSITION FOR IMPROVING GLUCOSE AND INSULIN METABOLISM IN COMPANION ANIMALS**

ZUSAMMENSETZUNG ZUR VERBESSERUNG DES GLUKOSE- UND INSULINSTOFFWECHSELS IN HAUSTIEREN

COMPOSITION PERMETTANT D'AMELIORER LE METABOLISME DU GLUCOSE ET DE L'INSULINE D'ANIMAUX DE COMPAGNIE

(84) Designated Contracting States:
**AT BE CH CY DE DK ES FI FR GB GR IE IT LI LU MC NL PT SE**

(30) Priority: **06.04.1998 US 55538**

(43) Date of publication of application:
**17.01.2001 Bulletin 2001/03**

(73) Proprietor: **THE IAMS COMPANY**
**Dayton, Ohio 45414-5801 (US)**

(72) Inventor: **SUNVOLD, Gregory, Dean**
**Eaton, OH 45320 (US)**

(74) Representative: **Caldwell, Judith Margaret et al**
**David Keltie Associates, 12 New Fetter Lane**
**London EC4A 1AP (GB)**

(56) References cited:
**EP-A- 0 205 354          WO-A-96/35421**
**WO-A-98/44932**

• M. DIEZ ET AL.: "Fibres alimentaires chez le chien : I. Définition et composition chimique" ANNALES DE MEDECINE VETERINAIRE, vol. 140, no. 6, 1996, pages 385-391, XP002110882 FR
• DATABASE WPI Section Ch, Week 9804 Derwent Publications Ltd., London, GB; Class B04, AN 98-033433 XP002110885 & CN 1 135 850 A (XIANHE FOOD GROUP CO LTD HAICHENG CITY), 20 November 1996 (1996-11-20)
• DATABASE WPI Section Ch, Week 9215 Derwent Publications Ltd., London, GB; Class B04, AN 92-120139 XP002110886 -& JP 04 063560 A (TERUMO CORP), 28 February 1992 (1992-02-28)
• H. MEYER ET AL.: "Gewichtsentwicklung und Körperzusammensetzung wachsender Hunde bei Fütterung isoenergetischer fett- oder kohlenhydratreicher Rationen" DEUTSCHE TIERÄRZTLICHE WOCHENSCHRIFT, vol. 86, no. 6, 1979, pages 215-220, XP002110883 DE
• G.S. MAHDI ET AL.: "The therapeutic value of barley in the treatment of diabetes mellitus" PROCEEDINGS OF THE NUTRITION SOCIETY, vol. 47, no. 3, 1988, page 178A XP002110884 GB

**Description**

The present invention relates to a composition to improve glucose and/or insulin metabolism in companion animals such as the dog and cat.

Several different conditions are associated with impaired glucose metabolism in companion animals such as the dog and cat. These include diabetes (both insulin dependent type and non-insulin dependent maturity onset type), obesity, geriatrics, and gestation (pregnancy). It is estimated that one out of every 100 dogs seen by a practicing veterinarian is diabetic. Obesity is estimated to occur in approximately 40% of the dog population. Of course, older companion animals (approximately 10% of the U.S. dog and cat populations are believed to be 11 years of age or older) and pregnant animals are common. Accordingly, there is a substantial percentage of the dog and cat population which are in categories associated with risk of having or developing problems with glucose and/or insulin metabolism.

Additionally, the diagnosis of diabetes or impaired glucose metabolism in dogs and cats usually only occurs after a hyperglycemic episode for the animal. Thus, animals which are borderline diabetics, or otherwise have moderately impaired glucose metabolisms, run a significant risk of not being diagnosed with diabetes until their condition has progressed and unmistakable symptoms have manifested themselves.

Ingestion of a meal results in a postprandial glucose response. This response is characterized by a surge in blood glucose. Insulin is the body's primary hormone that is used to store blood glucose. Thus, blood insulin levels generally go up after a meal as well as glucose. A relatively low insulin response to a meal indirectly indicates that postprandial glucose absorption was minimal. Thus, a means to prevent this "surge" in glucose and insulin after a meal would be advantageous to an animal with impaired glucose metabolism.

Another associated metabolic disorder with obesity and diabetes is hyperinsulinemia. Hyperinsulinemia is the presence of insulin at abnormally high levels in the blood. Counteracting the effects of hyperinsulinemia by lowering insulin levels in the blood can help lessen the progression of obesity and diabetes.

There have been attempts made in the past to control diabetics not only with drug therapy, but also with diet. Dietary fiber has been found to have an effect on controlling diabetes under certain circumstances. The addition of certain soluble fibers such as guar and pectin have been found to yield a reduced postprandial rise in blood glucose levels. However, not all soluble fibers provide benefits, and some result in undesirable side effects for the animal including diarrhea, flatulence, and abdominal cramping.

Examples of prior formulations directed to special diets include EP 205354, which teaches a dietetic dog biscuit containing vegetable hulls. CN 1135850 teaches an instant gruel formulation which lowers the morbidities of diseases such as diabetes which is prepared from corn, sorghum grain, beans and rice.

M. Diez et al., "Fibres alimentaires chez le chien: I. Definition et composition chimique" *Ann. Med. Vet.*, vol. 140, no. 6, 1996, pp. 385-391 teaches the inclusion of dietary fibers in feed for pets.

G.S. Mahdi et al., The therapeutic value of barley in the treatment of diabetes mellitus", Proceedings of the Nutrition Society, vol. 47, No. 3, 1988 teaches the use of barley flour in diets for the management of diabetes mellitus.

It would be desirable to be able to regulate and improve glucose and/or insulin metabolism in animals having impaired glucose and/or insulin metabolism. It would also be desirable to be able to regulate and improve glucose and/or insulin metabolism in even seemingly healthy animals with no overt symptoms to prevent the onset of a chronic diabetic condition. Accordingly, there still remains a need in the art to manage and improve glucose and/or insulin metabolism in a companion animal through diet to prevent or mediate the onset of impaired glucose and/or insulin function in an obese, geriatric, or diabetic companion animal.

The present invention meets these needs by providing a composition to improve glucose and/or insulin metabolism in companion animals by controlling the postprandial glycemic and insulin responses in those animals. In accordance with one aspect of the present invention, a pet food composition is provided and includes a source of protein, a source of fat, and a source of carbohydrates from a multiple grain source comprising a blend of sorghum and barley; a blend of corn and barley; a blend of corn and sorghum; or a blend of corn, sorghum, and barley. Preferably, the weight ratio of grain sources In the preferred blends is from about 1:5 to about 5:1, and more preferably the weight ratio of the preferred blends contains substantially equal amounts of each grain (i.e., a 1:1 ratio). Where a combination of three grain sources is used, the weight ratios of the lowest to highest amount of grain source will vary between from about 1:1 to about 5:1.

Preferably, the composition comprises from about 20 to about 40% crude protein, from about 4 to about 30% fat, from about 4 to about 20% total dietary fiber, and a source of starch which includes a blend of grain sources as previously described, although no specific ratios or percentages of these nutrients are required.

The pet food composition may optionally include chromium tripicolinate and a water soluble, cellulose ether. Additionally, the pet food composition may further include from about 1 to about 11 weight percent of supplemental total dietary fiber of fermentable fibers which have an organic matter disappearance of 15 to 60 weight percent when fermented by fecal bacteria for a 24 hour period.

When the composition of the present invention is fed to a companion animal, the postprandial glycemic response in that is animal controlled. The pet food composition consists essentially of a source of protein, a source of fat, and a source of carbohydrates from a multiple grain source comprising a blend of sorghum and barley; a blend of corn and barley; a blend of corn and sorghum; or a blend of corn, sorghum, and barley. The pet food composition of the present invention also Is useful to control hyperinsulinemia in a companion animal.

Accordingly, it is a feature of the present invention to provide a composition to improve glucose and/or insulin metabolism in companion animals by controlling the postprandial glycemic and/or insulin response in those animals. This, and other features and advantages of the present invention, will become apparent from the following detailed description, the accompanying drawings, and the appended claims.

Reference is now made, by way of example, to the accompanying drawings in which:

Fig. 1 is a graph illustrating the effect of different sources of starch on glucose levels in a dog at selected times after ingestion;

Fig. 2 Is a graph illustrating the effect of different sources of starch on insulin levels in a dog at selected times after ingestion;

Fig. 3 is a graph of the influence of the diet of the present invention on glucose (mg/dl) at selected times (minutes) after diet consumption in cats; end

Fig. 4 is a graph of the influence of the diet of the present invention on insulin (μIU/dl) at selected times (minutes) after diet consumption in cats.

The present invention utilizes a pet food composition which contains a multiple grain source which includes a blend of sorghum and barley; a blend of corn and sorghum; a blend of corn and barley; or a blend of corn, sorghum, and barley as starch sources to control the postprandial rise of both glucose and insulin levels in a companion animal. The use of additional grain sources in the present invention is optional. As used herein, "multiple grain source" means at least two different grain sources. Through the use of a multiple grain source, the diet of the animal aids in regulating the animal's glucose metabolism and insulin response after meals in an effective manner. Both healthy animals, as well as animals suffering from diabetes. obesity, hyperinsulinemia, geriatric animals, and pregnant animals will benefit from being fed the composition of the present invention.

The composition also optionally contains other ingredients which also have the effect of minimizing the postprandial glycemic and/or insulin response in an animal. The composition may include chromium tripicolinate in an amount of from between about 10 to about 500 micrograms of chromium per day. Chromium tripicolinate occurs in brewers yeast, and the yeast may be added to the pet food composition. Alternatively, the chromium tripicolinate may be added to the composition in a substantially pure form.

The composition may also contain a water soluble cellulose ether such as, for example, carboxymethyl cellulose or hydroxypropylmethyl cellulose ether (HPMC). If carboxymethyl cellulose is used, it is preferably a high viscosity composition in the range of from about 5,000 to about 65,000 cps (50 to 650 g/cm X sec.) and is added to the composition in an amount of appioxlmately 1% by weight. If HPMC is utilized, it is preferably also a high viscosity composition in the range of from about 10,000 to about 2,000,000 cps (100 to 20,000 g/cm X sec.) and is added to the composition in an amount of from about 1-2% by weight. A suitable grade of HPMC is available from The Dow Chemical Company under the designation METHOCEL™ K-100M. It has been found that such water soluble cellulose ethers have the effect of delaying the postprandial rise of glucose levels in the animal's blood.

The pet food composition of the present invention may also optionally contain a source of fermentable fibers which display certain organic matter disappearance percentages. The fermentable fibers which may be used have an organic matter disappearance (OMD) of from about 15 to 60 percent when fermented by fecal bacteria in vitro for a 24 hour period. Thai is, from about 15 to 60 percent of the total organic matter originally present is fermented and converted by the fecal bacteria. The organic matter disappearance of the fibers is preferably 20 to 50 percent, and most preferably is 30 to 40 percent.

Thus, in vitro OMD percentage may be calculated as follows:

$$\{1-[(OM\ residue - OM\ blank)/OM\ initial]\} \times 100,$$

where OM residue is the organic matter recovered after 24 hours of fermentation, OM blank is the organic matter recovered in corresponding blank tubes (i.e., tubes containing medium and diluted feces, but no substrate), and OM initial is that organic matter placed into the tube prior to fermentation. Additional details of the procedure are found in Sunvold et al, J. Anim. Sci. 1995, vol. 73:1099-1109.

The pet food composition can be any suitable pet food formula which also provides adequate nutrition for the animal. For example, a typical canine or feline diet for use in the present invention may contain from about 20 to about 40% crude protein (and preferably about 25 to about 35%), from about 4 to about 30% fat (and preferably about 8 to about 12%), and from about 4 to about 20% total dietary fiber, along with the multiple starch source, all percentages by weight. However, no specific ratios or percentages of these nutrients are required.

The fermentable fibers may be any fiber source which intestinal bacteria present in the animal can ferment to produce significant quantities of SCFAs. "Significant quantities" of SCFAs, for purposes of this invention, are amounts over 0.5 mmol of total SCFAs/gram of substrate in a 24 hour period. Preferred fibers include beet pulp, gum arabic (including gum talha), psyllium, rice bran, carob bean gum, citrus pulp, pectin, fructooligosaccharides and inulin, mannanoligosaccharides and mixtures of these fibers.

The fermentable fibers are used in the pet food composition in amounts from 1 to 11 weight percent of supplemental total dietary fiber, preferably from 2 to 9 weight percent, more preferably from 3 to 7 weight percent, and most preferably from 4 to 7 weight percent.

A definition of "supplemental total dietary fiber" first requires an explanation of "total dietary fiber". "Total dietary fiber" is defined as the residue of plant food which is resistant to hydrolysis by animal digestive enzymes. The main components of total dietary fiber are cellulose, hemicellulose, pectin, lignin and gums (as opposed to "crude fiber", which only contains some forms of cellulose and lignin). "Supplemental total dietary fiber" is that dietary fiber which is added to a food product above and beyond any dietary fiber naturally present in other components of the food product. Also, a "fiber source" is considered such when it consists predominantly of fiber.

In order that the invention may be more readily understood, reference is made to the following examples which are intended to illustrate the invention, but not limit the scope thereof.

Example 1

Thirty adult ovariohysterectomized female Beagles were used. The average body weight of the dogs was 9.62 kg ± 0.78 (SEM, range: 8.78 to 10.11 kg) at the initiation of the study. Fresh water was provided *ad libitum* during the entire period of study.

Following a stabilization period which lasted seven weeks, the dogs were randomized into five dietary treatment groups of six dogs each for the first replicate and received one of the five experimental diets. The dogs were re-randomized and assigned to a different experimental diet for the second replicate. Replicates I and II lasted a minimum of two weeks and a glycemic response test was performed at the end of each replicate.

Glycemic response tests were performed at the end of each replicate. The dogs were fasted for 24 hours prior to the initiation of the glycemic test. The catheterization site was shaved, aseptically prepared and the right cephalic vein was catheterized. Blood samples were collected in evacuated tubes containing sodium EDTA Terumo® Venoject tubes, 7.0 ml, Terumo Medical Corp., Elkton, MD). Two baseline samples were collected approximately five minutes apart. Immediately after the last baseline samples were collected, the dogs were fed 1% of body weight and allowed a maximum of 15 minutes to eat the experimental diets. Dogs not consuming the experimental diet within 15 minutes were excluded from the glycemic test for that day and retested the next day. Additional blood samples were collected at 10, 20, 30, 45, 60, 120, 180, and 240 minutes after the food was consumed. The blood samples were centrifuged at 1300 x g for 15 minutes and two aliquots of 1.0 ml of plasma from each time point were frozen within two hours of collection. Plasma glucose concentrations (mg/dl) were determined by hexokinase enzyme method (Cobas Mira, Roche Diagnostic System, Somerville, NJ) and insulin (IU/ml) was determined by standard radioimmunoassay method using RIA kit (DPC Diagnostic Products Corp., Los Angeles, CA).

During the stabilization period, dogs were fed an extruded maintenance diet (Eukanuba Adult Maintenance, The Iams Company, Lewisburg, OH) for seven weeks. The ingredient composition of the experimental diets is presented in Table 1, and the chemical composition of the experimental diets Is presented in Table 2. The dally feed intake was adjusted for individual dogs during this period until body weights were stable. During the study period, five experimental diets were evaluated. All the diets were formulated to contain equal starch content (approx. 30%) from different cereal sources (corn, wheat, barley, rice, and sorghum). To achieve this, protein levels were allowed to vary considerably and fat levels were allowed to vary slightly. The experimental diets were processed similarly with each starch source consisting of whole grain without the hull. Individual daily feed allowances were based on the stabilization period intake.

Table 1

| Ingredient[a] | Corn | Wheat | Barley | Rice | Sorghum |
|---|---|---|---|---|---|
| Starch source[b] | 51.3 | 53.2 | 59.1 | 43.6 | 46.9 |
| Poultry by-product meal | 33.9 | 31.7 | 23.5 | 45.1 | 39.9 |
| Poultry fat | 4.5 | 4.5 | 6.0 | 2.5 | 3.5 |

[a] All reported as percentages by weight

[b] Respective cereal flours for each diet

Table 1   (continued)

| Ingredient[a] | Corn | Wheat | Barley | Rice | Sorghum |
|---|---|---|---|---|---|
| Beet pulp | 4.0 | 4.0 | 4.0 | 4.0 | 4.0 |
| Brewer's yeast | 1.0 | 1.0 | 1.0 | 1.0 | 1.0 |
| Chicken digest | 1.0 | 1.0 | 1.0 | 1.0 | 1.0 |
| Vitamins | 0.4 | 0.4 | 0.4 | 0.4 | 0.4 |
| Choline chloride | 0.3 | 0.3 | 0.3 | 0.3 | 0.3 |
| DL-methionine | 0.2 | 0.2 | 0.3 | 0.1 | 0.2 |
| Minerals | 0.3 | 0.3 | 0.3 | 0.3 | 0.3 |
| Calcium carbonate | 1.3 | 1.4 | 1.9 | 0.7 | 1.0 |
| Monosodium phosphate | 1.2 | 1.4 | 1.6 | 0.4 | 1.0 |
| Potassium chloride | 0.6 | 0.6 | 0.6 | 0.6 | 0.6 |

[a] All reported as percentages by weight

Table 2

| Component (%) | Corn | Wheat | Barley | Rice | Sorghum |
|---|---|---|---|---|---|
| Dry matter | 92.0 | 91.7 | 93.6 | 93.0 | 93.6 |
| Protein | 29.7 | 32.0 | 25.2 | 37.0 | 34.3 |
| Fat | 11.1 | 9.8 | 10.8 | 10.3 | 10.9 |
| Ash | 7.2 | 7.4 | 7.8 | 7.3 | 7.7 |
| $NFE_{CF}$[a] | 41.6 | 40.2 | 46.1 | 36.8 | 38.5 |
| $NFE_{TDF}$[b] | 34.2 | 31.4 | 33.7 | 31.0 | 30.4 |
| Starch | 31.3 | 27.9 | 30.9 | 30.2 | 29.4 |
| Crude fiber | 2.4 | 2.2 | 3.7 | 1.6 | 2.2 |
| Total dietary fiber (TDF) | 9.8 | 11.0 | 16.1 | 7.6 | 10.3 |
| β-glucans (total) | 0.0 | 0.2 | 2.3 | 0.1 | 0.1 |
| Calcium | 1.4 | 1.2 | 1.3 | 1.4 | 1.3 |
| Phosphorous | 1.1 | 1.2 | 1.1 | 1.1 | 1.1 |

[a] NFE = Nitrogen free extract; $NFE_{CF}$ is the difference between 100 and the sum of moisture, protein, fat, crude fiber and ash.

[b] $NFE_{TDF}$ is the difference between 100 and the sum of moisture, protein, fat, total dietary fiber, and ash.

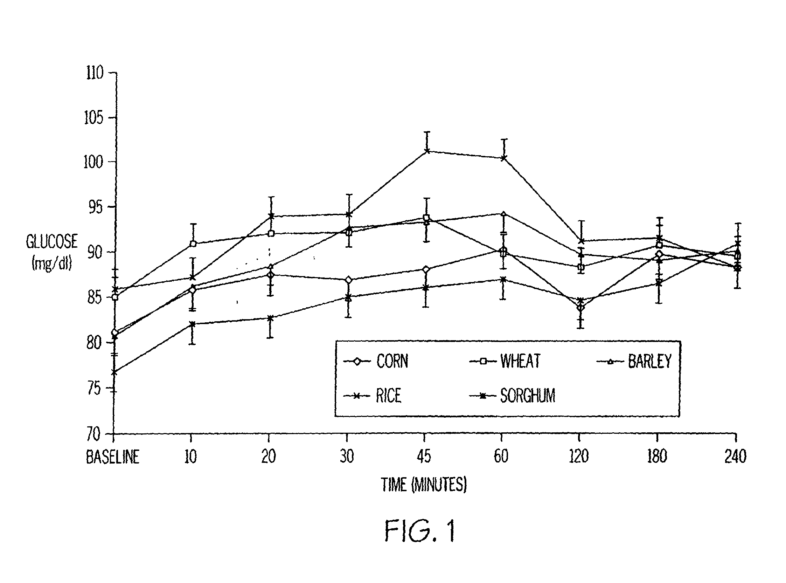

Glucose response: A significant (P<0.01) difference in glucose response for diet, time, and diet and time interaction was detected. Fig. 1 summarizes the postprandial glucose levels at different time points. At baseline, plasma glucose levels were significantly lower (P<0.0001) for sorghum as compared to wheat and rice. No differences (P > 0.01) were observed between corn, wheat, barley, and rice at baseline. Dietary regimens did not influence glucose levels at 10, 120, 180, and 240 minutes after feeding, but significant differences were observed at 20, 30, 45, and 60 minutes. Sorghurn had consistently lower plasma glucose levels than the other diets between 20 and 60 minutes and gradually elevated for the remainder of the time points. Plasma glucose levels of sorghum were not different (P>0.10) from corn, but were lower than (P<0.05) wheat and rice at 20 minutes, wheat, barley, and rice at 30 and 45 minutes, and rice at 60 minutes after feeding. Rice had higher (P<0.05) plasma glucose levels from 20 to 180 minutes as compared to other diets.

Table 3

| Diet | Average Glucose* (mg/dl) | Peak Glucose (Mg/dl) | Time Peak (min) | Area Under Curve (mg [min]/dl) |
|---|---|---|---|---|
| Corn | 86.8 ± 1.88[ab] | 96.2 ± 1.76[a] | 92.1 ± 23.04 | 20915 ± 481.85[a] |
| Wheat | 90.3 ± 1.95[bc] | 98.9 ± 2.42[a] | 75.8 ± 19.93 | 21627.9 ± 425.31[ab] |
| Barley | 89.4 ± 2.07[abc] | 99.4 ± 2.54[a] | 121.3 ± 23.84 | 21728.6 ± 518.8[ab] |
| Rice | 92.7 ± 1.67[c] | 108.7 ± 2.38[b] | 73.8 ± 12.45 | 22336.7 ± 471.4[b] |

* Average of all time points

Table 3   (continued)

| Diet | Average Glucose* (mg/dl) | Peak Glucose (Mg/dl) | Time Peak (min) | Area Under Curve (mg [min]/dl) |
|---|---|---|---|---|
| Sorghum | $84.5 \pm 2.02^a$ | $97.3 \pm 2.98^a$ | $131.3 \pm 28.74$ | $20640.4 \pm 440.47^a$ |
| All values are expressed as mean $\pm$ SEM, means within columns having different superscripts are significantly different (p<0.05). | | | | |

* Average of all time points

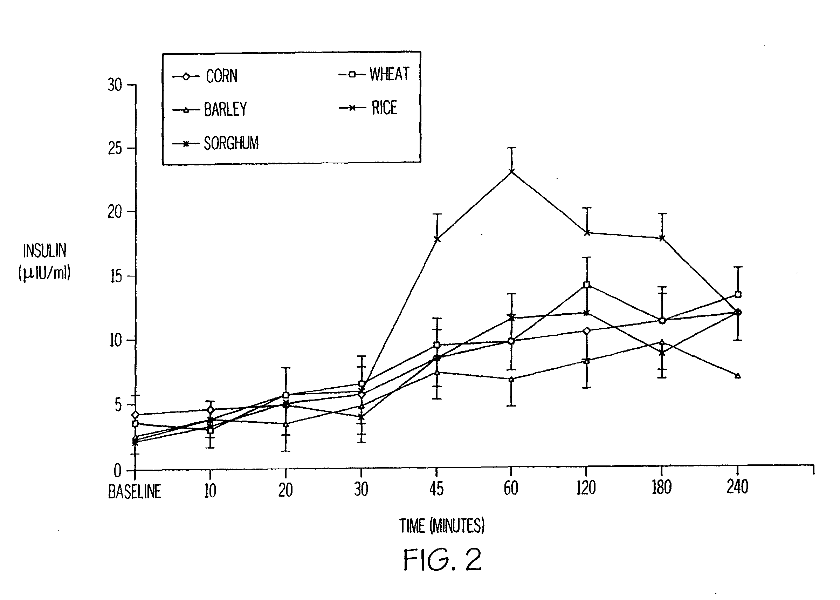

The average plasma glucose level was lower (P<0.05) for sorghum as compared to wheat and rice (Table 3). Rice resulted in higher (P<0.05) glucose levels than corn and sorghum. No significant differences in average plasma glucose levels existed between wheat, barley, and rice. The plasma glucose peak was significantly higher (P<0.05) for rice as compared to all other diets, however, no significant differences (P>0.10) existed between corn, wheat, barley and sorghum. Dietary starch source failed to influence the time of glucose peak. The area under curve (AUC) was higher (P<0.05) for wheat as compared to corn and sorghum and no differences (P>0.10) were noted between corn, wheat, barley, and sorghum. **Insulin response**: Significant difference (P<0.01) between diets and times was detected (P<0.0001), but the time and diet interaction was not significant (P>0.10) for the postprandial insulin response. Fig. 2 summarizes the insulin levels at different time points. At baseline, the plasma insulin level of corn was higher (P<0.05) than those of barley, rice and sorghum and no significant differences (P<0.10) were noticed between wheat, barley, rice, and sorghum. Dietary regimens did not influence insulin response at 10, 20, 30, 120, 180, and 240 minutes time points, however, rice resulted in higher (P<0.05) insulin at 45, and 60 minutes time points when compared to other diets. Barley had the lowest plasma insulin levels from 20 minutes to 240 minutes, even though the differences were not significant (P>0.10) as compared to the other experimental diets.

Table 4

| Diet | Average Insulin*(μIU/ml) | Peak Insulin (μIU/ml) | Time Peak (min) | Area Under Curve (μIU [min]/ml) |
|---|---|---|---|---|
| Corn | $7.41 \pm 1.27^a$ | $16.6 \pm 3.79^a$ | $110.0 \pm 24.98$ | $2343.3 \pm 428.54^a$ |
| Wheat | $8.26 \pm 1.26^{ab}$ | $17.8 \pm 3.32^a$ | $132.5 \pm 20.63$ | $2554.9 \pm 434.98^{ab}$ |
| Barley | $5.60 \pm 0.78^a$ | $11.4 \pm 1.64^a$ | $131.3 \pm 19.81$ | $1746.4 \pm 292.75^a$ |
| Rice | $11.67 \pm 2.10^b$ | $35.92 \pm 7.76^b$ | $96.3 \pm 19.41$ | $3794.5 \pm 754.66^b$ |
| Sorghum | $7.38 \pm 1.14^a$ | $20.44 \pm 4.36^a$ | $131.3 \pm 23.51$ | $2255.6 \pm 394.92^a$ |
| All values are expressed as mean $\pm$ SEM, means within columns having different superscripts are significantly different (p<0.05). | | | | |

* Average of all time points

The average plasma insulin level was higher (P<0.05) for rice as compared to corn, barley, and sorghum and no differences (P>0.10) were noted between corn, wheat, barley, and sorghum (Table 4). The plasma insulin peak was significantly higher (P<0.05) for rice as compared to all other diets and no differences (P>0.10) existed between corn, wheat, barley, and sorghum. Time of insulin peak was not affected by the dietary regimen. Area under curve was higher (P<0.05) for rice as compared to corn, barley, and sorghum and no differences (P>0.10) were observed between wheat and rice or between corn, wheat, barley, and sorghum. Although not statistically significant barley consistently resulted in the lowest average insulin, peak insulin, and area under the curve (Table 4).

The resulting low blood glucose response for sorghum and low insulin response for barley to a meal is beneficial for minimizing the glycemic response to a meal by the canine. Additionally, blends of sorghum and barley would give the combined effect of decreasing both postprandial blood glucose and insulin levels after a meal.

Example 2

Thirty adult intact female Domestic Short Hair cats (from Sinclair Research Center, Columbia, MO) were used. The cats were housed individually according to AAALAC (American Association for Accreditation of Laboratory Animal Care) standards. All procedures were reviewed and approved by the Institutional Animal Care and Use Committee and the cats were treated humanely and ethically during the entire study period. The animals were vaccinated against rhinotracheitis virus, calicivirus, and panleukopenia virus. The cats were parasite free. The average body weight of the cats was 3.66 kg $\pm$ 0.99 (SEM (standard error of the mean), range: 2.36 to 6.19 kg) at the initiation of the study. Fresh water was provided ad libitum during the entire period of study.

Calculated amount of food to maintain body weight was provided to the cats daily. Because the cats had to consume their food rapidly during the glycemic challenge, the period of food presentation was gradually reduced during the stabilization period to one hour daily. The cats appeared to adjust very well to a limited time of food presentation. None of the animals were sick or required medical attention during the study period.

Five dietary treatments were evaluated in a three replicate cross-over design. Following a seven week stabilization period, the cats were randomized based on body weight and serum glucose levels into five dietary treatment groups of six cats each for the first replicate. The cats were re-randomized and assigned to a different experimental diet for the second and third replicate. Each replicate lasted a minimum of three weeks and a glycemic response test was performed at the end of each replicate.

Glycemic response tests were performed at the end of each replicate. The cats were fasted for 24 hours prior to the initiation of the glycemic test. The day before the glycemic response test, the catheterization site was shaved, aseptically prepared, and the jugular vein was catheterized under light sedation. The sedation regimen consisted of the combination ketamine (10 mg/lb; 27 mg/kg ) and diazepam (0.5 mg/lb; 1.3 mg/kg) administered intravenously. Blood samples were in syringes and transferred in evacuated tubes containing no anticoagulant (Terumo® Venoject tubes (7.0 ml), available from Terumo Medical Corporation, Elkton, MD).

Two baseline samples were collected approximately ten minutes apart. Immediately after the last baseline sample was collected, the cats were fed 1.09% of body weight and allowed a maximum of 15 minutes to eat the experimental diets. This food intake (1.09% of body weight) consisted of half the daily food intake during the seven week stabilization. Cats not consuming the experimental diet within 15 minutes were excluded from the glycemic test for that day and retested the next day. Time 0 corresponded to the end of the food intake.

Additional blood samples were collected at 1, 2, 4, 6, 8, 10, 12, 15, 18 hours after the food was consumed. The blood samples were centrifuged at 1300 x g for 15 minutes and two serum aliquots from each time point were frozen within two hours of collection. Serum glucose concentrations (mg/dl) were determined by hexokinase enzyme method (Cobas Mira, Roche Diagnostic System, Sommerville, NJ) and insulin (mIU/ml) was determined by standard radioimmunoassay method using RIA kit (DPC Diagnostic Products Corporation, Los Angeles, CA).

The ingredient composition of experimental diets is presented in Table 5 below.

Table 5.

| Ingredient composition of starch diets | | | | | |
|---|---|---|---|---|---|
| Ingredient | Corn | Wheat | Barley | Rice | Sorghum |
| Starch source * | 45.4 | 48.0 | 56.1 | 38.1 | 45.0 |
| Poultry by-product meal | 39.5 | 35.5 | 25.6 | 46.6 | 40.0 |
| Beet pulp | 5.0 | 5.0 | 5.0 | 5.0 | 5.0 |
| Poultry fat | 1.6 | 3.0 | 4.0 | 2.0 | 1.7 |
| Dried egg product | 2.0 | 2.0 | 2.0 | 2.0 | 2.0 |
| Chicken digest | 2.0 | 2.0 | 2.0 | 2.0 | 2.0 |
| Brewer's yeast | 1.0 | 1.0 | 1.0 | 1.0 | 1.0 |
| Fish meal | 1.0 | 1.0 | 1.0 | 1.0 | 1.0 |
| Minerals | 1.5 | 1.5 | 2.2 | 1.5 | 1.4 |
| Vitamins | 0.6 | 0.6 | 0.6 | 0.5 | 0.6 |
| DL-Methionine | 0.4 | 0.4 | 0.5 | 0.3 | 0.3 |

* Respective cereal flours for each diet.

During the study period, five experimental diets were evaluated. All the diets were formulated to contain equal starch content (approximately 30%) from different cereal sources as listed above (corn, wheat, barley, rice, and sorghum). To achieve this, protein levels were allowed to vary. The experimental diets were processed similarly with each starch source consisting of whole grain without the hull. Individual daily feed allowances were based on the stabilization period intake.

The nutrients in the diets were analyzed by AOCS-AOAC methods (Association of Official Analytical Chemists - *Official Methods of Analysis*, Arlington, VA, 1994.). Protein was determined by Leco combustion analyzer (AOAC 990.03), fat was determined by acid hydrolysis (AOAC 920.39), crude fiber was determined by Fibertec (AOAC 973.18), moisture was determined by drying sample at 135° C for 2 hours (AOAC 30.15), and total ash was determined by incinerating the sample at 600° C for 4 hours (AOAC 920.39). Nitrogen-free-extract (NFE) was computed as the difference between 100% and the sum of protein, fat, fiber, ash and water content. Calcium and phosphorus contents of the diets were determined by atomic absorption spectrophotometer (AOAC 968.08) and Vanado-Molybdate method (AOAC 965.15) respectively. Starch was assayed quantitatively (Bondar, R.J.L., and D.C. Mead, "Evaluation of glucose-6-phosphate dehydrogenase from Leuconostoc mesenteroides in the hexokinase method for determining glucose in starch," Clin. Chem. 20:586 (1974); MacRae, J.C., and D.G. Armstrong, J.Sci. Food Agric. 19:578 (1968)), b-glucan fractions were enzymatically quantitated (AOAC 995.16), and total dietary fiber was assayed by the standard enzymatic/gravimetric procedure (AOAC 991.43).

The variables measured for statistical analysis were: insulin and glucose levels at each time point and their respective peak, time to peak, overall averages, and areas under the curves. The glucose and insulin baseline levels were calculated as the average of both baseline samples. Different areas under the curves were calculated for both glucose and insulin; 1) total area under the curve (AUC) and 2) area under the curve before and after the 4 hour time point (AUC<4 and AUC>4, respectively).

The general linear model procedure of SAS (statistical analysis system) was used for three sets of analyses. The first studied time-dependent response and investigated linear, quadratic, and cubic time trend, all orthogonally. The classification included source for treatment, time, and treatment by time interaction. The second analysis was for variance for all the variables measured and calculated. The classification included source for replicate, treatment, and replicate-treatment interaction. The third analysis was for covariance with "gain while on the treatment" as a covariate. This violates one of the covariance analysis requirements, but is believed to offer some information about the effects of body weight change on response. The classification was the same as for the second analysis. All mean separations were by a 5% least significant difference (LSD). The LSD was used if the experiment-wise F-test was rejected at a<0.10.

The chemical composition of experimental diets is summarized in Table 6 below.

Table 6.

| Diet Composition | | | | | |
|---|---|---|---|---|---|
| Nutrients | Wheat | Barley | Rice | Corn | Sorghum |
| Protein* | 36.1 | 30.9 | 41.5 | 37.6 | 38.5 |
| Ash | 7.3 | 7.5 | 8.1 | 7.5 | 7.8 |
| Fat | 12.2 | 122 | 11.4 | 11.4 | 11.6 |
| TDF | 11.8 | 17.0 | 6.9 | 9.9 | 6.5 |
| NFE | 32.4 | 32.4 | 32.2 | 33.5 | 35.7 |
| Calcium | 1.3 | 1.2 | 1.6 | 1.3 | 1.4 |
| Phosphorus | 1.1 | 1.0 | 1.2 | 1.2 | 1.2 |
| Beta Glucans | ND ** | 0.02 | ND | ND | ND |
| Starch | 33.2 | 32.3 | 34.0 | 34.6 | 34.6 |

*All values expressed on a percent dry matter basis.

** Not detectable.

The dry matter and starch contents were similar in all diets (91.7 to 93.6 wt% and 32.3 to 34.6 wt%, respectively). The fat content varied from 11.4 (rice) to 12.2 wt% (barley) and protein from 30.9 (bariey) to 41.5 wt% (rice). The NFE content was highest for sorghum (35.7 wt%) and lowest for rice (32.2 wt%). Total dietary fiber was highest (17.0 wt%) for barley and lowest for sorghum (6.5 wt%).

For glucose response, a strong time-diet interaction (P<0.01) was detected. The orthogonal analysis indicated that rice had a significantly drfferent (P<0.05) linear trend than wheat, barley, and sorghum, but not quite different from corn (P<0.10). Wheat had also a different linear trend (P<0.05) than rice, corn, and sorghum base diets but similar to barley. No differences between diets were noted for the quadratic and cubic trends.

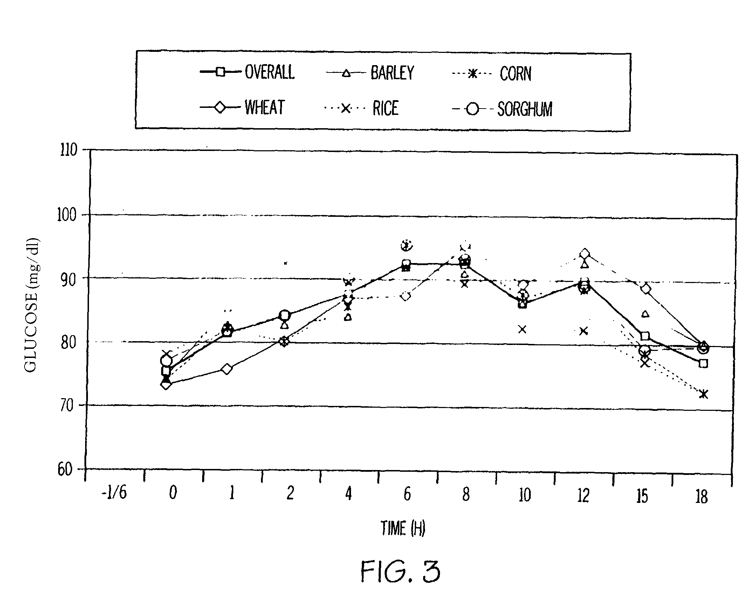

Table 7 below summarizes the postprandial glucose levels at different time points. Dietary regimens did not influence glucose levels at most time points (baseline, 1, 4, 6, 8, 10, and 18 hours after feeding), but significant differences were observed at 2, 12, and 15 hours. At two hours post-prandial, rice resulted in the greatest (P<0.05) glucose level compared to other starch sources. See Fig. 3 for a graphical representation of the data from Table 7. Wheat, barley and corn resulted in the lowest (P<0.05) glucose levels.

At 12 hours post-prandial, wheat had the greatest (P<0.05) glucose level while rice resulted in the lowest (P<0.05)

Table 7. Influence of experimental diets on glucose (mg/dl)[1] at selected times (hours) after diet consumption in adult cats.

| Diets | Baseline | 1 | 2 | 4 | 6 | 8 | 10 | 12 | 15 | 18 |
|---|---|---|---|---|---|---|---|---|---|---|
| Wheat | 72.8±2.8 | 75.5±2.2 | 80.5±2.3[a] | 86.8±5.0 | 87.3±4.7 | 95.8±4.9 | 89.1±3.4 | 94.6±2.7[a] | 88.6±3.2[c] | 80.4±3.0 |
| Barley | 74.6±2.4 | 85.2±6.3 | 83.1±2.7[a] | 83.9±4.2 | 92.1±6.5 | 91.1±4.1 | 86.4±3.3 | 93.3±3.7[a] | 85.1±4.3[b,c] | 80.1±4.2 |
| Rice | 78.2±2.4 | 83.4±4.3 | 92.9±5.5[b] | 89.4±5.6 | 91.9±4.2 | 89.5±2.7 | 82.3±2.8 | 82.3±3.0[b] | 76.8±2.7[a] | 72.6±2.2 |
| Corn | 73.2±2.5 | 82.4±3.0 | 80.3±3.0[a] | 85.7±3.6 | 95.4±4.4 | 93.2±2.4 | 87.4±3.6 | 88.5±2.6[a,b] | 78.6±2.5[a,b] | 72.6±1.8 |
| Sorghum | 77.2±3.6 | 81.3±2.6 | 84.4±2.8[a,b] | 90.9±3.5 | 95.4±3.8 | 93.3±2.2 | 86.1±2.2 | 90.1±3.3[a,b] | 78.9±2.3[a,b] | 79.7±2.9 |

[1] Values are expressed as mean ± SEM, means within columns having different superscripts are significantly different (P<0.05).

EP 1 067 843 B1

9

glucose level. See Fig. 3. At 15 hours post-prandial, wheat and barley resulted in the greatest (P<0.05) glucose level while rice resulted in the lowest (P<0.05) glucose level.

Barley resulted in a delayed (P<0.05) time to peak glucose compared to other starch sources as shown by Table 8 below. Rice resulted in the numerically greatest glucose AUC<4 but the lowest (P<0.05) glucose AUC>4.

Table 8.

| Effect of experimental diets on postprandial glucose overall averages and peak areas. | | | | | |
|---|---|---|---|---|---|
| Diet | Average Glucose[1](mg/dl) | Time Peak (h) | AUC& (mg[h]/dl) | AUC<4& (mg[h]/dl) | AUC>4& (mg[h]/dl) |
| Wheat | 86.6±1.6 | 8.9±0.7[a,b] | 1527.9±30.1 | 420.1±18.0 | 1103.4±17.5[c] |
| Barley | 86.8±3.0 | 10.3±1.0[a] | 1440.0±75.2 | 429.3±26.8 | 1021.0±50.2[a,b] |
| Rice | 84.2±2.1 | 6.9±1.2[b] | 1413.8±38.4 | 466.7±25.1 | 957.4±23.6[a] |
| Corn | 85.1±1.8 | 8.6±0.8[a,b] | 1437.2±41.7 | 423.1±16.9 | 1014.3±28.7[a,b] |
| Sorghum | 86.7±1.4 | 7.2±0.8[b] | 1482.2±33.4 | 448.5±14.6 | 1029.7±24.2[b,c] |

& AUC: Total area under the curve; AUC<4: Area under the curve before the 4 hour time point; AUC>4: Area under the curve after the 4 hour time point.
[1] Average of all time points

In summary, all diets had similar glucose values at baseline and 18 hours postprandial. Rice resulted in a rapid elevation of glucose levels but declined quickly indicating both hyper- and hypoglycemic effects. Wheat had a moderate rise in glucose levels followed by a prolonged decline in glucose levels. The most desirable effects occurred for corn, sorghum, and barley with a more attenuated rise and decline in glucose response compared to the other diets.

For insulin response in the animals, a strong diet and time by diet interaction (P<0.001) was detected. The orthogonal analysis indicated that rice had a significantly different (P<0.05) linear trend than that of wheat, barley, corn, or sorghurn. Wheat, barley, corn, and sorghum-based diets had similar linear trends. No differences between diets were noted for quadratic and cubic trends.

Table 9 below summarizes the insulin levels at different time points. Dietary regimens did not influence insulin response at 8, 10, 12, 15, and 18 hour time points, but significant differences were observed at baseline, 1, 2, 4, and 6 hours.

Table 9. Influence of experimental diets on insulin (mIU/ml)[1] at selected times (hours) after diet consumption in adult cats.

| Diets | Baseline | 1 | 2 | 4 | 6 | 8 | 10 | 12 | 15 | 18 |
|---|---|---|---|---|---|---|---|---|---|---|
| Wheat | 5.89±0.85[a,b] | 9.10±1.76[a] | 10.73±2.0[a,b] | 12.44±1.58[a] | 12.17±1.6[a,b] | 11.12±1.10 | 9.27±1.38 | 10.38±1.81 | 9.70±1.93 | 7.42±1.44 |
| Barley | 4.88±.51[a] | 10.93±2.18[a] | 9.91±1.53[a] | 10.76±1.53[a] | 11.35±2.14[a] | 9.31±1.34 | 8.39±1.32 | 9.11±1.24 | 7.24±1.63 | 5.58±1.17 |
| Rice | 8.32±2.03[b] | 16.58±2.71[b] | 15.66±2.56[b] | 17.89±2.75[b] | 15.51±1.61[b] | 12.19±1.13 | 9.23±1.17 | 9.66±1.44 | 7.56±1.40 | 4.95±0.38 |
| Corn | 4.04±.046[a] | 8.03±1.07[a] | 10.49±2.15[a] | 9.90±1.44[a] | 10.34±1.06[a] | 9.17±1.29 | 7.64±1.08 | 7.43±1.21 | 5.81±1.06 | 4.74±0.77 |
| Sorghum | 4.58±0.39[a] | 8.90±0.91[a] | 8.24±1.14[a] | 10.57±1.10[a] | 11.54±1.72[a] | 10.89±1.71 | 7.65±1.22 | 7.20±1.11 | 5.80±0.75 | 6.20±1.17 |

[1] Values are expressed as mean ± SEM, means within columns having different superscripts are significantly different (P<0.05).

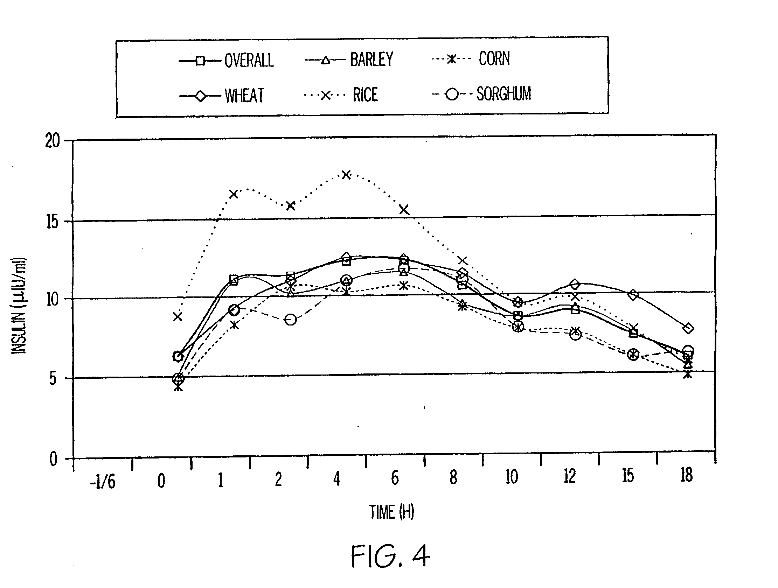

Rice resulted in higher (P<0.05) insulin levels at baseline, 1, 2, 4, and 6 hour time points than the other diets, except for wheat, which had a similar insulin response at baseline, 2, and 6 hour time points. See Fig. 4 which is a graphical representation of the data presented in Table 9. The insulin response was generally lowest for barley, corn and sorghum.

The insulin overall average and peak for rice were significantly higher (P<0.05) than the ones for barley, corn and sorghum, but not different than wheat as shown in Table 10 below. The insulin AUC<4 for rice was significantly higher (P<0.05) than the other sources of starch.

Table 10.

| Effect of experimental diets on postprandial insulin overall averages and peak areas | | | | |
|---|---|---|---|---|
| Diet | Average Insulin (mlU/ml) | Time Peak (h) | AUC& (mlU[h]/ml) | AUC<4& (mlU[h]/ml) | AUC>4& (mlU[h]/ml) |
| Wheat | 10.2±1.3[a,b] | 5.9±0.7 | 179.8±27.1 | 59.6±8.3[a] | 118.0±19.2 |
| Barley | 9.0±1.2[a] | 5.6±1.1 | 158.3±24.8 | 54.8±8.1[a] | 103.9±17.5 |
| Rice | 12.1±1.2[b] | 5.4±1.0 | 200.9±21.0 | 84.5±12.0[b] | 115.1±11.6 |
| Corn | 8.2±0.9[a] | 5.2±0.9 | 135.4±14.4 | 50.6±7.1[a] | 89.9±12.1 |
| Sorghum | 8.6±1.0[a] | 5.8±0.9 | 146.8±18.5 | 49.1±5.5[a] | 95.4±12.9 |

& AUC: Total area under the curve; AUC<4: Area under the curve before the 4 hour time point; AUC>4: Area under the curve after the 4 hour time point.
[1] Average of all time points.

In summary, rice, followed by wheat, resulted in a higher insulin response within the first six hours of the challenge. For all insulin variables measured, barley, corn, and sorghum did not result in a different (P>0.05) insulin response.

Compared to rice, corn, sorghum and barley generally resulted in a gradual rise and decline in glucose response. Further, compared to rice, corn, sorghum and barley generally resulted in a lower insulin response. Blends of corn and sorghurn, or sorghum and barley, or corn and barley, or corn, sorghum, and barley would give the combined effect of decreasing both postprandial blood glucose and insulin levels after a meal. Because barley, corn, and sorghum sources help reduce insulin levels, this would be of practical interest in controlling hyperinsulinemia as well.

**Claims**

1.  A pet food composition for controlling postprandial glycemic response in a companion animal comprising a source of protein, a source of fat, and a source of carbohydrates from a multiple grain source comprising a blend of sorghum and barley; a blend of corn and barley; a blend of corn and sorghum; or a blend of com, sorghum, and barley, in which the weight ratio of grain sources is from 1:5 to 5:1 where a combination of two grain sources is used and in which the weight ratios of the lowest to highest amount of grain sources is from 1:1 to 5:1 where a combination of three grain sources is used.

2.  A pet food composition as claimed in claim 1 in which the ratio of grain sources is 1:1.

3.  A pet food composition as claimed in claim 1 further including chromium tripicolinate.

4.  A pet food composition as claimed in claim 1 further including a water soluble, cellulose ether.

5.  A pet food composition as claimed in claim 1 further including from 1 to 11 weight percent of supplemental total dietary fiber of fermentable fibers which have an organic matter disappearance of 15 to 60 weight percent when fermented by fecal bacteria for a 24 hour period.

6.  A pet food composition as claimed in claim 1 wherein said source of protein comprises from 20 to 40%, said source of fat comprises from 4 to 30%, and said total dietary fiber comprises from 4 to 20%, all percentages by weight, of said composition.

7.  A pet food composition as claimed in claim 1 in which said multiple grain source comprises a blend of sorghum and barley.

8.  A pet food composition as claimed in claim 7 in which the ratio of sorghum to barley is between 1:3 to 3:1.

9. A pet food composition as claimed in claim 7 in which the ratio of sorghum to barley is 1:1.

10. A pet food composition as claimed in claim 1 in which said multiple grain source comprises a blend of corn and barley,

11. A pet food composition as claimed in claim 1 in which said multiple grain source comprises a blend of corn and sorghum.

12. A pet food composition as claimed in claim 1 in which said multiple grain source comprises a blend of corn. sorghum, and barley.

**Patentansprüche**

1. Nahrungsmittelzusammensetzung für Tiere zur Kontrolle der postprandialen glykämischen Antwort bei einem Begleittier, die eine Proteinquelle, eine Fettquelle und eine Kohlenhydratquelle aus einer Mehrkornquelle umfasst, die eine Mischung aus Sorghum und Gerste; eine Mischung aus Mais und Gerste; eine Mischung aus Mais und Sorghum; oder eine Mischung aus Mais, Sorghum und Gerste umfasst, in der das Gewichtsverhältnis der Kornquellen 1:5 bis 5:1 beträgt, wenn eine Kombination aus zwei Kornquellen verwendet wird und in der das Gewichtsverhältnis der niedrigsten zur höchsten Menge der Kornquellen 1:1 bis 5:1 beträgt, wenn eine Kombination aus drei Kornquellen verwendet wird.

2. Nahrungsmittelzusammensetzung für Tiere nach Anspruch 1, wobei das Verhältnis der Kornquellen 1:1 beträgt.

3. Nahrungsmittelzusammensetzung für Tiere nach Anspruch 1, die darüber hinaus Chromtripicolinat enthält.

4. Nahrungsmittelzusammensetzung für Tiere nach Anspruch 1, die darüber hinaus einen wasserlöslichen Celluloseether enthält.

5. Nahrungsmittelzusammensetzung für Tiere nach Anspruch 1, die darüber hinaus 1 bis 11 Gew.-% der gesamten ergänzenden Faserkost an fermentierbaren Fasern, die einen organischen Materialschwund von 15 bis 60 Gew.-% aufweisen, wenn sie 24 Stunden lang durch Fäkalbakterien fermentiert werden.

6. Nahrungsmittelzusammensetzung für Tiere nach Anspruch 1, wobei die Proteinquelle 20 bis 40 % umfasst, die Fettquelle 4 bis 30 % umfasst und die Gesamtfaserkost 4 bis 20 % umfasst, jeweils in Gew.-% bezogen auf die Zusammensetzung.

7. Nahrungsmittelzusammensetzung für Tiere nach Anspruch 1, wobei die Mehrkornquelle eine Mischung aus Sorghum und Gerste umfasst.

8. Nahrungsmittelzusammensetzung für Tiere nach Anspruch 7, wobei das Verhältnis von Sorghum zu Gerste zwischen 1:3 und 3:1 liegt.

9. Nahrungsmittelzusammensetzung für Tiere nach Anspruch 7, wobei das Verhältnis von Sorghum zu Gerste 1:1 beträgt.

10. Nahrungsmittelzusammensetzung für Tiere nach Anspruch 1, wobei die Mehrkornquelle ein Gemisch aus Mais und Gerste umfasst.

11. Nahrungsmittelzusammensetzung für Tiere nach Anspruch 1, wobei die Mehrkornquelle eine Mischung aus Mais und Sorghum umfasst.

12. Nahrungsmittelzusammensetzung für Tiere nach Anspruch 1, wobei die Mehrkornquelle ein Gemisch aus Mais, Sorghum und Gerste umfasst.

**EP 1 067 843 B1**

**Revendications**

1. Composition alimentaire pour animaux domestiques pour contrôler la réponse glycémique après le repas chez un animal de compagnie comprenant une source de protéine, une source de lipide, et une source de glucide à partir d'une source à céréales multiples comprenant un mélange de sorgho et d'orge ; un mélange de maïs et d'orge ; un mélange de maïs et de sorgho ; ou un mélange de maïs, de sorgho et d'orge, dans laquelle le rapport en poids des sources de céréales varie de 1:5 à 5:1 où une combinaison de deux sources de céréales est utilisée et dans laquelle les rapports en masse de la plus faible à la plus haute quantité de sources de céréales varient de 1:1 à 5:1 où une combinaison de trois sources de céréales est utilisée.

2. Composition alimentaire pour animaux domestiques selon la revendication 1, dans laquelle le rapport en masse des sources de céréales est de 1:1.

3. Composition alimentaire pour animaux domestiques selon la revendication 1, comprenant de plus du chrome tripicolinate.

4. Composition alimentaire pour animaux domestiques selon la revendication 1, comprenant de plus une cellulose éther, soluble dans l'eau.

5. Composition alimentaire pour animaux domestiques selon la revendication 1, comprenant de plus de 1 à 11% en poids du total supplémentaire de fibre alimentaire de fibres fermentables qui ont une disparition en matière organique de 15 à 60 % en poids quand elles sont fermentées par une bactérie fécale pendant une période de 24 heures.

6. Composition alimentaire pour animaux domestiques selon la revendication 1, dans laquelle ladite source de protéine comprend de 20 à 40 %, ladite source de lipide comprend de 4 à 30 %, et ladite fibre alimentaire comprend de 4 à 20 %, tous ces pourcentages étant en poids, de ladite composition.

7. Composition alimentaire pour animaux domestiques selon la revendication 1, dans laquelle ladite source à céréales multiples comprend un mélange de sorgho et d'orge.

8. Composition alimentaire pour animaux domestiques selon la revendication 7, dans laquelle le rapport de sorgho à l'orge varie entre 1:3 et 3:1.

9. Composition alimentaire pour animaux domestiques selon la revendication 7, dans laquelle le rapport de sorgho à l'orge est sensiblement de 1:1.

10. Composition alimentaire pour animaux domestiques selon la revendication 1, dans laquelle ladite source à céréales multiples comprend un mélange de maïs et d'orge.

11. Composition alimentaire pour animaux domestiques selon la revendication 1, dans laquelle ladite source à céréales multiples comprend un mélange de maïs et de sorgho.

12. Composition alimentaire pour animaux domestiques selon la revendication 1, dans laquelle ladite source à céréales multiples comprend un mélange de maïs, de sorgho, et d'orge.

FIG. 1

FIG. 2

EP 1 067 843 B1

FIG. 3

FIG. 4

EP 1 067 843 B1